(19) 

Europäisches Patentamt
European Patent Office
Office européen des brevets

(11) **EP 4 112 558 A1**

(12) **EUROPEAN PATENT APPLICATION**
published in accordance with Art. 153(4) EPC

(43) Date of publication:
**04.01.2023 Bulletin 2023/01**

(21) Application number: **21760526.0**

(22) Date of filing: **25.02.2021**

(51) International Patent Classification (IPC):
**C01G 53/00** (2006.01)   **H01M 4/36** (2006.01)
**H01M 4/505** (2010.01)   **H01M 4/525** (2010.01)

(52) Cooperative Patent Classification (CPC):
**C01G 53/00; H01M 4/36; H01M 4/505;**
**H01M 4/525;** Y02E 60/10

(86) International application number:
**PCT/JP2021/007144**

(87) International publication number:
**WO 2021/172446 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2020   JP 2020032999**

(71) Applicant: **Panasonic Intellectual Property
Management Co., Ltd.
Osaka-shi, Osaka 540-6207 (JP)**

(72) Inventors:
• **MURATA Akiko**
  **Osaka-shi, Osaka 540-6207 (JP)**
• **KAWADA Hiroshi**
  **Osaka-shi, Osaka 540-6207 (JP)**
• **HIBINO Mitsuhiro**
  **Osaka-shi, Osaka 540-6207 (JP)**

(74) Representative: **Novagraaf International SA
Chemin de l'Echo 3
1213 Onex, Geneva (CH)**

(54) **POSITIVE ELECTRODE ACTIVE MATERIAL FOR NON-AQUEOUS ELECTROLYTE
SECONDARY BATTERY, AND NON-AQUEOUS ELECTROLYTE SECONDARY BATTERY**

(57)    This positive electrode active material for a non-aqueous electrolyte secondary battery contains a lithium transition metal complex oxide capable of occluding and releasing Li. The lithium transition metal complex oxide is represented by general formula $Li_xM1_yO_zF_w$ (in the formula, $0.5 \leq x < 3.1$, $1 \leq y \leq 2$, $2 \leq z+w \leq 4$, and M1 is at least one element selected from Ni, Co, Mn, Ti, Fe, Al, Ge, Si, and Nb), and M2 (M2 being at least one element selected from Ca, Sr, Sc, Er, Y, Zr, and W) is included in the interior of secondary particles of the lithium transition metal complex oxide.

Figure 1

**Description**

TECHNICAL FIELD

The present disclosure generally relates to a positive electrode active material for a non-aqueous electrolyte secondary battery and to a non-aqueous electrolyte secondary battery using the positive electrode active material.

BACKGROUND ART

A positive electrode active material included in a non-aqueous electrolyte secondary battery may undergo a side reaction with an electrolyte, resulting in lowered battery capacity with repeated charge and discharge. This tendency is particularly significant with a battery using a positive electrode active material with a high energy density. Patent Literature 1 discloses a positive electrode active material in which a surface of a spinel-type lithium-manganese-based oxide is coated with nanoparticles of an olivine-type lithium metal phosphate oxide or the like. Patent Literature 2 discloses a positive electrode active material in which fine particles of an oxide of a metal element such as Zr adhere on a surface of a lithium-containing composite oxide.

CITATION LIST

PATENT LITERATURES

   PATENT LITERATURE 1: Japanese Unexamined Patent Application Publication No. 2013-191540
   PATENT LITERATURE 2: Japanese Unexamined Patent Application Publication No. 2012-138197

SUMMARY

Secondary batteries using the positive electrode active materials disclosed in Patent Literature 1 and Patent Literature 2 have improved durability but lower battery capacity compared with a secondary battery using an uncoated positive electrode active material. The positive electrode active materials disclosed in Patent Literature 1 and Patent Literature 2 still have room for improvement in the battery capacity.

A positive electrode active material for a non-aqueous electrolyte secondary battery of an aspect of the present disclosure includes a lithium-transition metal composite oxide capable of occluding and releasing Li. The lithium-transition metal composite oxide is represented by the general formula $Li_xM1_yO_zF_w$, wherein $0.5 \leq x < 3.1$, $1 \leq y \leq 2$, $2 \leq z+w \leq 4$, and M1 represents at least one or more elements selected from the group consisting of Ni, Co, Mn, Ti, Fe, Al, Ge, Si, and Nb, and the positive electrode active material includes M2 inside secondary particles of the lithium-transition metal composite oxide, wherein M2 represents at least one or more elements selected from the group consisting of Ca, Sr, Sc, Er, Y, Zr, and W.

A non-aqueous electrolyte secondary battery of an aspect of the present disclosure comprises: a positive electrode including the positive electrode active material for a non-aqueous electrolyte secondary battery; a negative electrode; and an electrolyte.

According to an aspect of the present disclosure, the durability and battery capacity of the battery may be improved.

BRIEF DESCRIPTION OF DRAWINGS

   FIG. 1 is a longitudinal sectional view of a cylindrical secondary battery of an example of an embodiment.
   FIG. 2 is SEM images of cross sections and EPMA analysis results of positive electrode active materials in Example 1 and Comparative Example 1.

DESCRIPTION OF EMBODIMENTS

A positive electrode active material in which a surface of a lithium-transition metal composite oxide is coated with an oxide or the like can inhibit side reactions of decomposition of an electrolyte and elution of a transition metal element from the positive electrode active material with charge and discharge of the battery. However, the coating makes lithium ions difficult to move, and may lower the battery capacity. The present inventors have intensively investigated the above problem, and as a result, have found that use of a positive electrode active material in which at least one or more elements selected from the group consisting of Ca, Sr, Sc, Er, Y, Zr, and W are present inside secondary particles of a lithium-transition metal composite oxide may improve the durability and battery capacity of the secondary battery. This is presumably because the presence of the at least one or more elements selected from the group consisting of Ca, Sr, Sc, Er, Y, Zr, and W inside the secondary particles of the lithium-transition metal composite oxide facilitates move of lithium ions.

Hereinafter, an example of an embodiment of a non-aqueous electrolyte secondary battery according to the present disclosure will be described in detail. Hereinafter, a cylindrical battery housing a wound electrode assembly in a cylindrical battery case will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. A shape of the battery case is not limited to be cylindrical shape, and may be, for example, a rectangular shape, a coin shape, or the like, and may be a battery case constituted of laminated sheets including a metal layer and a resin layer.

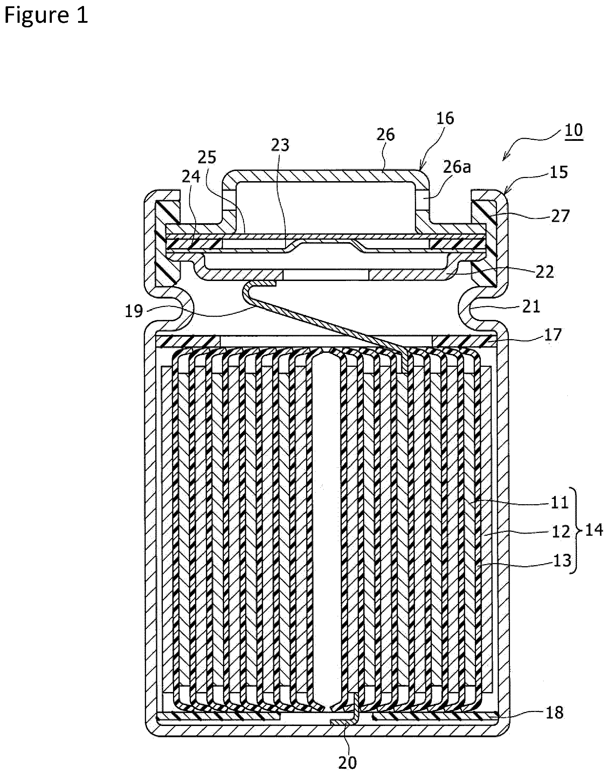

FIG. 1 is a longitudinal sectional view of a cylindrical secondary battery 10 of an example of an embodiment. In the secondary battery 10 illustrated in FIG. 1, an electrode assembly 14 and a non-aqueous electrolyte are housed in an exterior housing body 15. The electrode assembly 14 has a wound structure in which a positive electrode 11 and a negative electrode 12 are wound with a separator 13 interposed therebetween. For a non-aqueous solvent (organic solvent) of the non-aqueous electrolyte, carbonates, lactones, ethers, ketones, esters, and the like may be used, and two or more of these solvents may be mixed to be used. When two or more of the solvents are mixed to be used, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt of the non-aqueous electrolyte, $LiPF_6$, $LiBF_4$, $LiCF_3SO_3$, and the like, and a mixture thereof may be used. An amount of the electrolyte salt dissolved in the non-aqueous solvent may be, for example, 0.5 to 2.0 mol/L. Hereinafter, for convenience of description, the sealing assembly 16 side will be described as the "upper side", and the bottom side of the exterior housing body 15 will be described as the "lower side".

An opening end part of the exterior housing body 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. A negative electrode lead 20 extends through a through hole of the insulating plate 18 toward the bottom side of the exterior housing body 15, and is welded to a bottom inner face of the exterior housing body 15. In the secondary battery 10, the exterior housing body 15 becomes a negative electrode terminal. When the negative electrode lead 20 is provided on the terminal end part, the negative electrode lead 20 extends through an outside of the insulating plate 18 toward the bottom side of the exterior housing body 15, and is welded to the bottom inner face of the exterior housing body 15.

The exterior housing body 15 is, for example, a bottomed cylindrical metallic exterior housing can. A gasket 27 is provided between the exterior housing body 15 and the sealing assembly 16 to achieve sealability inside the secondary battery 10. The exterior housing body 15 has a grooved part 21 formed by, for example, pressing the side part thereof from the outside to support the sealing assembly 16. The grooved part 21 is preferably formed in a circular shape along a circumferential direction of the exterior housing body 15, and supports the sealing assembly 16 with the gasket 27 interposed therebetween and with the upper face of the grooved part 21.

The sealing assembly 16 has the filter 22, a lower vent member 23, an insulating member 24, an upper vent member 25, and the cap 26 which are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of central parts thereof, and the insulating member 24 is interposed between each of the circumferential parts of the vent members 23 and 25. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

Hereinafter, the positive electrode 11, negative electrode 12, and separator 13, which constitute the secondary battery 10, particularly the positive electrode active material included in a positive electrode mixture layer constituting the positive electrode 11 will be described in detail.

[Positive Electrode]

The positive electrode 11 has, for example, a positive electrode core such as a metal foil and a positive electrode mixture layer formed on the positive electrode core. For the positive electrode core, a foil of a metal stable within a potential range of the positive electrode, such as aluminum, a film in which such a metal is disposed on a surface layer thereof, and the like may be used. The positive electrode mixture layer includes, for example, a positive electrode active material, a binder, a conductive agent, and the like. The positive electrode may be produced by, for example, applying a positive electrode mixture slurry including the positive electrode active material, the binder, the conductive agent, and the like on the positive electrode core and drying to form the positive electrode mixture layer, and then rolling this positive electrode mixture layer.

Examples of the conductive agent included in the positive electrode mixture layer may include carbon-based particles such as carbon black (CB), acetylene black (AB), Ketjenblack, and graphite. These materials may be used singly, or may be used in combination of two or more thereof.

Examples of the binder included in the positive electrode mixture layer may include fluororesins such as polytetrafluoroethylene (PTFE) and polyvinylidene fluoride (PVdF), polyacrylonitrile (PAN), a polyimide resin, an acrylic resin, and a polyolefin resin. These materials may be used singly, or may be used in combination of two or more thereof.

The positive electrode active material includes a lithium-transition metal composite oxide capable of occluding and releasing Li. The lithium-transition metal composite oxide may have a spinel structure. The spinel structure of the lithium-transition metal composite oxide may be confirmed by X-ray diffraction method (XRD).

The lithium-transition metal composite oxide is, for example, a secondary particle formed by aggregation of primary particles. The particle diameter of the primary particles constituting the secondary particle is, for example, 0.05 $\mu$m to 1 $\mu$m. The particle diameter of the primary particles is measured as a diameter of a circumscribed circle in a particle image observed with a scanning electron microscope (SEM).

A median diameter (D50) on a volumetric basis of the secondary particles of the lithium-transition metal composite oxide is, for example, 3 $\mu$m to 30 $\mu$m, preferably 5 $\mu$m to 25 $\mu$m, and particularly preferably 7 $\mu$m to 15 $\mu$m. The D50, also referred to as a median diameter, means a particle diameter at which a cumulative frequency is 50% from a smaller particle diameter side in a particle size distribution on a volumetric basis. The particle size distribution of the composite oxide (Z) may be measured by using a laser diffraction-type particle size distribution measuring device (for example, MT3000II, manufactured by MicrotracBEL Corp.) with water as a dispersion medium.

The lithium-transition metal composite oxide is represented by the general formula $Li_xM1_yO_zF_w$, wherein $0.5 \leq x < 3.1$, $1 \leq y \leq 2$, $2 \leq z+w \leq 4$, and M1 represents at least one or more elements selected from the group consisting of Ni, Co, Mn, Ti, Fe, Al, Ge, Si, and Nb. On a mole fraction of each element constituting the lithium-transition metal composite oxide, for example, elements excluding F may be measured by inductively coupled plasma (ICP) atomic emission spectroscopic analysis, and F may be measured by ion chromatograph (IC) measurement.

The lithium-transition metal composite oxide may be represented by the general formula $Li_{1+\alpha}Ni_{0.5-\beta}Mn_{1.5-\gamma}M2_{\beta+\gamma}O_aF_b$, wherein $0 \leq \alpha \leq 0.2$, $0 \leq \beta < 0.2$, $0 \leq y < 0.5$, $0 \leq b \leq 0.2$, $3.8 \leq a+b \leq 4.2$, and M2 represents at least one or more elements selected from the group consisting of Ti, Fe, Al, Ge, Si, and Nb.

The above $\alpha$ in $1+\alpha$, which indicates a rate of Li in the lithium-transition metal composite oxide, satisfies $0 \leq \alpha \leq 0.2$, and preferably satisfies $0 \leq \alpha < 0.05$. If $\alpha$ is less than 0, the battery capacity is lowered in some cases compared with the case where $\alpha$ satisfies the above range. If $\alpha$ is more than 0.2, the charge-discharge cycle characteristics are lowered in some cases compared with the case where $\alpha$ satisfies the above range.

The above $\beta$ in $0.5-\beta$, which indicates a rate of Ni to the total number of moles of metal elements excluding Li in the lithium-transition metal composite oxide, satisfies $0 \leq \beta < 0.2$, preferably satisfies $0 \leq \beta \leq 0.15$, and more preferably satisfies $0 \leq \beta \leq 0.1$.

The above $\gamma$ in $1.5-\gamma$, which indicates a rate of Mn to the total number of moles of metal elements excluding Li in the lithium-transition metal composite oxide, satisfies $0 \leq \gamma < 0.5$, preferably satisfies $0 \leq \gamma \leq 0.3$, and more preferably satisfies $0 \leq \gamma \leq 0.1$.

The above M to the total number of moles of metal elements excluding Li in the lithium-transition metal composite oxide (M represents at least one or more elements selected from the group consisting of Ti, Fe, Al, Ge, Si, Nb, Ta, Zr, W, Mo, Sc, Y, and Er) is an optional component, and $\beta+\gamma$, which indicates a rate thereof, satisfies $\beta+\gamma \geq 0$.

The above b, which indicates a rate of F in the lithium-transition metal composite oxide, satisfies $0 \leq b \leq 0.2$, and preferably satisfies $0 \leq b \leq 0.1$. Containing F in the lithium-transition metal composite oxide improves stability of a crystalline structure of the lithium-transition metal composite oxide. Stabilizing the crystalline structure of the lithium-transition metal composite oxide improves, for example, the durability of the secondary battery.

The positive electrode active material includes M2 inside the secondary particles of the lithium-transition metal composite oxide, wherein M2 represents at least one or more elements selected from the group consisting of Ca, Sr, Sc, Er, Y, Zr, and W. Including M2 inside the secondary particles of the lithium-transition metal composite oxide may improve the durability and battery capacity of the secondary battery.

M2 preferably includes at least one or more elements selected from the group consisting of Ca and Sr. Use of the lithium-transition metal composite oxide including Ca or Sr inside the secondary particles may improve the durability and battery capacity of the secondary battery.

Hereinafter, for convenience of description, the above lithium-transition metal composite oxide and the positive electrode active material including M2 included inside the secondary particles of this lithium-transition metal composite oxide are referred to as "composite oxide (Y)". In the present disclosure, the positive electrode active material included in the secondary battery is mainly composed of the composite oxide (Y), and may be composed of substantially only the composite oxide (Y). The positive electrode active material may include a composite oxide other than the composite oxide (Y) or another compound within a range in that an object of the present disclosure is not impaired.

A mole fraction of M2 based on the total number of moles of metal elements excluding Li contained in the lithium-transition metal composite oxide is preferably 0.2% to 10%, and more preferably 0.2% to 2%. The mole fraction of M2 in the composite oxide (Y) may be measured by XRD

Distribution of M2 in the composite oxide (Y) may be two-dimensionally observed with an electron probe micro analyzer (EPMA). Specifically, with EPMA, much Sr present inside the secondary particles of the lithium-transition metal composite oxide may be confirmed by observing a shape of the secondary particles of the lithium-transition metal composite oxide with a backscattered electron image similar to SEM, and then performing a composition analysis at the same position.

The composite oxide (Y) may be synthesized by, for example, adding and mixing a Li source and a M2 source with a composite compound (X) containing no Li to be calcined at 200°C to 1050°C. Examples of the composite compound (X) may include a composite oxide, hydroxide, and carbonate compound that contain Ni, Mn, and the like. Examples of the Li source may include LiOH. Examples of the M2 source may include a hydroxide, carbonate compound, and nitrate compound of M2. Examples of the M2 source may include $Ca(OH)_2$, $CaCO_3$, $Ca(NO_3)_2$, $Sr(OH)_2$, $SrCO_3$, and $Sr(NO_3)_2$. The M2 source may be any of a powdery solid and an aqueous solution dissolving the M2 source. The method of adding the aqueous solution is preferable from a viewpoint of dispersing M2 inside or outside the secondary particles of the lithium-transition metal composite oxide. When the aqueous solution is added, the M2 source is preferably $Ca(NO_3)_2$ and $Sr(NO_3)_2$, which have a high solubility to water, from a viewpoint of easiness of preparing the aqueous solution.

[Negative Electrode]

The negative electrode 12 has, for example, a negative electrode core such as a metal foil and a negative electrode mixture layer provided on a surface of the negative electrode core. For the negative electrode core, a foil of a metal stable within a potential range of the negative electrode, such as copper, a film in which such a metal is disposed on a surface layer thereof, and the like may be used. The negative electrode mixture layer includes, for example, a negative electrode active material and a binder. The negative electrode may be produced by, for example, applying a negative electrode mixture slurry including the negative electrode active material, the binder, and the like on the negative electrode core and drying to form the negative electrode mixture layer, and subsequently rolling this negative electrode mixture layer.

The negative electrode mixture layer includes, for example, a carbon-based active material to reversibly occlude and release lithium ions, as the negative electrode active material. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the binder included in the negative electrode mixture layer, a fluororesin, PAN, a polyimide, an acrylic resin, a polyolefin, and the like may be used similar to that in the positive electrode, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator, a porous sheet having an ion permeation property and an insulation property is used. Specific examples of the porous sheet include a fine porous thin film, a woven fabric, and a nonwoven fabric. As a material for the separator, a polyolefin such as polyethylene and polypropylene, cellulose, and the like are preferable. The separator may have any of a single-layered structure and a multilayered structure. On a surface of the separator, a heat-resistant layer and the like may be formed.

EXAMPLES

Hereinafter, the present disclosure will be further described with Examples, but the present disclosure is not limited to these Examples.

<Example 1>

[Synthesis of Positive Electrode Active Material]

A nickel-manganese composite hydroxide with a composition of $Ni_{0.5}Mn_{1.5}(OH)_4$ obtained by coprecipitation was calcined at 500°C to obtain a nickel-manganese composite oxide (X).

Then, the nickel-manganese composite oxide (X), LiOH, and an aqueous solution of $Sr(NO_3)_2$ were mixed so that a molar ratio between the total amount of Ni and Mn, Li, and Sr was 1:0.5:0.002. This mixture was calcined at 900°C for 10 hours, and then crushed to obtain a lithium composite oxide (Y). XRD demonstrated that a mole fraction of Sr based on the total number of moles of the metal elements excluding Li contained in the lithium-transition metal composite oxide was 0.16%.

[Production of Positive Electrode]

The above positive electrode active material, acetylene black, and polyvinylidene fluoride (PVdF) were mixed at a solid-content mass ratio of 96.3:2.5:1.2, an appropriate amount of N-methyl-2-pyrrolidone (NMP) was added, and then the mixture was kneaded to prepare a positive electrode mixture slurry. This positive electrode mixture slurry was applied on both surfaces of a positive electrode core made of aluminum foil, the applied film was dried, and then rolled using a roller and cut to a predetermined electrode size to obtain a positive electrode in which the positive electrode mixture layer was formed on both the surfaces of the positive electrode core. An exposed part where a surface of the positive electrode core was exposed was provided at a part of the positive electrode.

[Production of Negative Electrode]

Natural graphite was used as the negative electrode active material. The negative electrode active material, carboxymethyl cellulose sodium salt (CMC-Na), and styrene-butadiene rubber (SBR) were mixed at a solid-content mass ratio of 100:1:1 in an aqueous solution to prepare a negative electrode mixture slurry. This negative electrode mixture slurry was applied on both surfaces of a negative electrode core made of copper foil, the applied film was dried, and then rolled using a roller and cut to a predetermined electrode size to obtain a negative electrode in which the negative electrode mixture layer was formed on both the surfaces of the negative electrode core. An exposed part where a surface of the negative electrode core was exposed was provided at a part of the negative electrode.

[Preparation of Non-Aqueous Electrolyte]

Fluoroethylene carbonate (FEC), ethylene carbonate (EC), and ethyl methyl carbonate (EMC) were mixed at a volume ratio of 1:1:6 to obtain a non-aqueous solvent. Into the non-aqueous solvent, $LiPF_6$ was dissolved at a concentration of 1.0 mol/L to obtain a non-aqueous electrolyte.

[Production of Battery]

An aluminum lead was attached to the exposed part of the positive electrode, a nickel lead was attached to the exposed part of the negative electrode, the positive electrode and the negative electrode were spirally wound with a separator made of polyolefin interposed therebetween, and then press-formed in the radial direction to produce a flat, wound electrode assembly. This electrode assembly was housed in an exterior housing body composed of an aluminum laminated sheet, the above non-aqueous electrolyte was injected thereinto, and then an opening of the exterior housing body was sealed to obtain a non-aqueous electrolyte secondary battery having a designed capacity of 650 mAh.

[Evaluation of Capacity Maintenance Rate]

First, under a temperature environment at 25°C, the battery produced above was charged at a constant current of 0.2 C until a battery voltage reached 4.9 V, and charged at a constant voltage of 4.9 V until a current value reached 0.02 C. Then, the battery was discharged at a constant current of 0.2 C until the battery voltage reached 3.0 V. A battery after this charge-discharge cycle was repeated 5 times was specified as an initial battery.

On the initial battery, the following cycle test was performed. A discharge capacity at the 3rd cycle and a discharge capacity at the 26th cycle in the cycle test were determined to calculate a capacity maintenance rate with the following formula.

$$\text{Capacity Maintenance Rate (\%)} = (\text{Discharge Capacity at 26th Cycle} / \text{Discharge Capacity at 3rd Cycle}) \times 100$$

<Cycle Test>

Under a temperature environment at 25°C, a test cell was charged at a constant current of 0.2 C until a battery voltage reached 4.9 V, and charged at a constant voltage of 4.9 V until a current value reached 0.02 C. Then, the test cell was discharged at a constant current of 0.2 C until the battery voltage reached 3.0 V. This charge-discharge cycle was repeated 26 times.

<Example 2>

A battery was produced to perform the evaluation in the same manner as in Example 1 except that the nickel-manganese composite oxide (X), LiOH, and the aqueous solution of $Sr(NO_3)_2$ were mixed so that a molar ratio between the total amount of Ni and Mn, Li, and Sr was 1:0.5:0.02. XRD demonstrated that a mole fraction of Sr based on the total number of moles of the metal elements excluding Li contained in the lithium-transition metal composite oxide was 0.96%.

<Example 3>

A battery was produced to perform the evaluation in the same manner as in Example 1 except that $Ca(NO_3)_2$ was used instead of $Sr(NO_3)_2$.

<Example 4>

A battery was produced to perform the evaluation in the same manner as in Example 2 except that $Ca(NO_3)_2$ was used instead of $Sr(NO_3)_2$.

<Comparative Example 1>

A nickel-manganese composite oxide (X) was obtained by coprecipitation in the same manner as in Example 1. Then, the nickel-manganese composite oxide (X) and LiOH were mixed so that a molar ratio between the total amount of Ni and Mn, and Li was 1:0.5, and this mixture was calcined at 900°C for 10 hours to obtain a calcined product. Into this calcined product, an aqueous solution of $Sr(NO_3)_2$ was added and mixed so that a molar ratio between the total amount of Ni and Mn, and Sr was 1:0.002. The mixture was calcined at 900°C for 10 hours, then crushed to synthesize a lithium composite oxide (Z), and this lithium composite oxide (Z) was used as the positive electrode active material. With the obtained positive electrode active material (lithium composite oxide (Z)), a battery was produced to perform the evaluation in the same manner as in Example 1.

<Comparative Example 2>

A battery was produced to perform the evaluation in the same manner as in Comparative Example 1 except that, an aqueous solution of $Sr(NO_3)_2$ was added and mixed into the calcined product so that a molar ratio between the total amount of Ni and Mn, and Sr was 1:0.02.

<Comparative Example 3>

A battery was produced to perform the evaluation in the same manner as in Comparative Example 1 except that $Ca(NO_3)_2$ was used instead of $Sr(NO_3)_2$.

<Comparative Example 4>

A battery was produced to perform the evaluation in the same manner as in Comparative Example 2 except that $Ca(NO_3)_2$ was used instead of $Sr(NO_3)_2$.

Table 1 summarizes the results of the discharge capacity of the initial battery (initial capacity) and the capacity maintenance rate of the batteries in Examples and Comparative Examples. Table 1 also shows the M2 element, the amount of M2 added, and the presence or absence of M2 inside the secondary particles of the lithium-transition metal composite oxide.

[Table 1]

|  | M2 | | | Evaluation results | |
| --- | --- | --- | --- | --- | --- |
|  | Element | Amount added [mol%] | Presence or absence of Ca or Sr in particles | Initial capacity [mAh/g] | Capacity maintenance rate [%] |
| Example 1 | Sr | 0.2 | Presence | 140.8 | 98.6 |
| Example 2 | Sr | 2 | Presence | 140.9 | 98.9 |
| Example 3 | Ca | 0.2 | Presence | 136.1 | 99.0 |
| Example 4 | Ca | 2 | Presence | 131.8 | 99.3 |
| Comparative Example 1 | Sr | 0.2 | Absence | 133.1 | 98.2 |
| Comparative Example 2 | Sr | 2 | Absence | 129.8 | 98.8 |
| Comparative Example 3 | Ca | 0.2 | Absence | 132.7 | 98.6 |
| Comparative Example 4 | Ca | 2 | Absence | 129.7 | 98.8 |

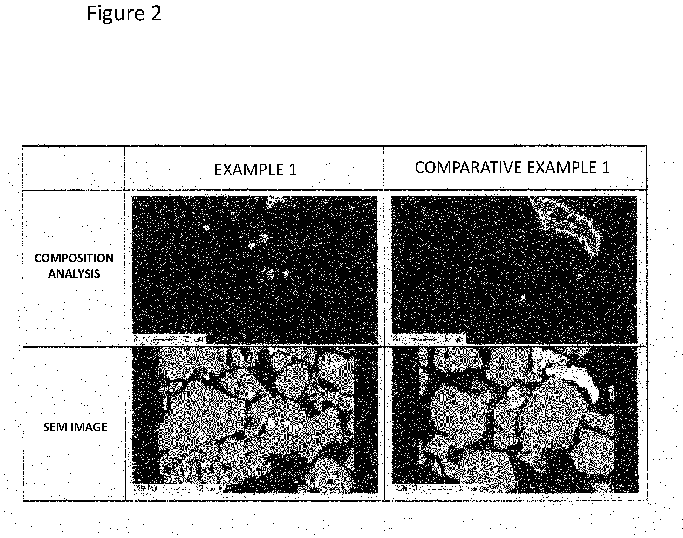

The battery of Example 1 had higher discharge capacity and capacity maintenance rate than the battery of Comparative Example 1. Also, in batteries of Examples 2 to 4 and Comparative Examples 2 to 4, the batteries of Examples had higher discharge capacity and capacity maintenance rate than the batteries of Comparative Examples. FIG. 2 shows SEM images of cross sections and EPMA analysis results of the positive electrode active materials in Example 1 and Comparative Example 1. Sr in Example 1 was unevenly distributed inside the secondary particles of the lithium-transition metal composite oxide, and Sr in Comparative Example 1 was unevenly distributed between the secondary particles of the lithium-transition metal composite oxide. The same tendency was observed between Example 2 and Comparative Example 2. Ca in Examples 3 and 4 were unevenly distributed inside the secondary particles of the lithium-transition metal composite oxide, and Ca in Comparative Examples 3 and 4 were unevenly distributed between the secondary particles of the lithium-transition metal composite oxide.

REFERENCE SIGNS LIST

    10 Secondary battery
    11 Positive electrode
    12 Negative electrode
    12a Winding terminal end part
    13 Separator
    14 Electrode assembly
    15 Exterior housing body
    16 Sealing assembly
    17, 18 Insulating plate
    19 Positive electrode lead
    20 Negative electrode lead

21 Grooved part
22 Filter
23 Lower vent member
24 Insulating member
25 Upper vent member
26 Cap
26a Opening
27 Gasket

## Claims

1. A positive electrode active material for a non-aqueous electrolyte secondary battery, the positive electrode active material including:

   a lithium-transition metal composite oxide capable of occluding and releasing Li, wherein
   the lithium-transition metal composite oxide is represented by the general formula $Li_xM1_yO_zF_w$, wherein $0.5 \leq x < 3.1$, $1 \leq y \leq 2$, $2 \leq z+w \leq 4$, and M1 represents at least one or more elements selected from the group consisting of Ni, Co, Mn, Ti, Fe, Al, Ge, Si, and Nb, and
   the positive electrode active material includes M2 inside secondary particles of the lithium-transition metal composite oxide, wherein M2 represents at least one or more elements selected from the group consisting of Ca, Sr, Sc, Er, Y, Zr, and W.

2. The positive electrode active material for a non-aqueous electrolyte secondary battery according to claim 1, wherein the lithium-transition metal composite oxide is represented by the general formula $Li_{1+\alpha}Ni_{0.5-\beta}Mn_{1.5-\gamma}M2_{\beta+\gamma}O_aF_b$, wherein $0 \leq \alpha \leq 0.2$, $0 \leq \beta < 0.2$, $0 \leq \gamma < 0.5$, $0 \leq b \leq 0.2$, $3.8 \leq a+b \leq 4.2$, and M2 represents at least one or more elements selected from the group consisting of Ti, Fe, Al, Ge, Si, and Nb.

3. The positive electrode active material for a non-aqueous electrolyte secondary battery according to claim 1 or 2, wherein the M2 includes at least one or more elements selected from the group consisting of Ca and Sr.

4. The positive electrode active material for a non-aqueous electrolyte secondary battery according to any one of claims 1 to 3, wherein a mole fraction of M2 based on a total number of moles of metal elements excluding Li contained in the lithium-transition metal composite oxide is 0.2% to 10%.

5. A non-aqueous electrolyte secondary battery, comprising:

   a positive electrode including the positive electrode active material for a non-aqueous electrolyte secondary battery according to any one of claims 1 to 4;
   a negative electrode; and
   an electrolyte.

# Figure 1

Figure 2

|  | EXAMPLE 1 | COMPARATIVE EXAMPLE 1 |
|---|---|---|
| COMPOSITION ANALYSIS | | |
| SEM IMAGE | | |

## INTERNATIONAL SEARCH REPORT

| International application No. |
| --- |
| PCT/JP2021/007144 |

**A. CLASSIFICATION OF SUBJECT MATTER**
C01G 53/00(2006.01)i; H01M 4/36(2006.01)i; H01M 4/505(2010.01)i; H01M 4/525(2010.01)i
FI: H01M4/505; H01M4/36 B; H01M4/525; H01M4/36 A; C01G53/00 A

According to International Patent Classification (IPC) or to both national classification and IPC

**B. FIELDS SEARCHED**

Minimum documentation searched (classification system followed by classification symbols)
C01G53/00; H01M4/36; H01M4/505; H01M4/525

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005-322480 A (NEC CORP.) 17 November 2005 (2005-11-17) examples | 1–5 |
| X | JP 2006-351487 A (SONY CORP.) 28 December 2006 (2006-12-28) examples | 1, 3–5 |
| A | | 2 |
| X | JP 2017-69135 A (TOYOTA INDUSTRIES CORPORATION) 06 April 2017 (2017-04-06) examples | 1, 4–5 |
| A | | 2–3 |
| A | JP 2020-7210 A (TOYOTA INDUSTRIES CORPORATION) 16 January 2020 (2020-01-16) | 1–5 |
| P, X | WO 2020/262348 A1 (PANASONIC CORP.) 30 December 2020 (2020-12-30) examples | 1, 3–5 |
| P, A | | 2 |

☐ Further documents are listed in the continuation of Box C.    ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 07 May 2021 (07.05.2021) | 18 May 2021 (18.05.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## INTERNATIONAL SEARCH REPORT
Information on patent family members

International application No.

PCT/JP2021/007144

| Patent Documents referred in the Report | Publication Date | Patent Family | Publication Date |
|---|---|---|---|
| JP 2005-322480 A | 17 Nov. 2005 | (Family: none) | |
| JP 2006-351487 A | 28 Dec. 2006 | (Family: none) | |
| JP 2017-69135 A | 06 Apr. 2017 | (Family: none) | |
| JP 2020-7210 A | 16 Jan. 2020 | WO 2020/003848 A1 | |
| WO 2020/262348 A1 | 30 Dec. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013191540 A
- JP 2012138197 A